# FASCICULE DE BREVET EUROPEEN

(11) **EP 2 162 341 B1**
(45) Date de publication et mention de la délivrance du brevet: **10.08.2011**
(21) Numéro de dépôt: 08805909.2
(22) Date de dépôt: 02.06.2008
(51) Int. Cl.: B62D 25/12, E05C 17/04, E05C 17/14

(54) **DISPOSITIF DE RETENUE DE CAPOT POUR VEHICULE AUTOMOBILE**
VORRICHTUNG ZUM HALTEN DER HAUBE EINES MOTORFAHRZEUGS
DEVICE FOR RETAINING THE BONNET FOR A MOTOR VEHICLE

(30) Priorité: 04.06.2007 FR 0703982
(43) Date de publication de la demande: 17.03.2010
(73) Titulaire: Renault S.A.S., 92100 Boulogne-Billancourt (FR)
(72) Inventeur: KERVELLA, Jean, F-76620 Le Havre (FR)
(86) Numéro de dépôt international: PCT/FR2008/050966
(87) Numéro de publication internationale: WO 2008/152320

(56) Documents cités:
- EP-A- 0 107 812
- EP-A- 1 541 791
- JP-A- 59 055 972

## Description

La présente invention concerne un dispositif de retenue de capot pour véhicule automobile, formé d'une béquille dont la première extrémité porte des premiers moyens d'articulation sur la caisse du véhicule, et dont l'extrémité libre porte un moyen d'accrochage du capot.

De façon connue, et telle que présentée dans les documents EP 1541791 (divulguant toutes les caractéristiques du préambule de la revendication 1) et JP59055972, une béquille de capot est articulée à son extrémité inférieure sur la structure du véhicule, et est apte à maintenir en position relevée le capot du véhicule par un accrochage de son extrémité supérieure sur ce capot.

Ce type de béquille peut présenter des défauts de robustesse aussi bien dans l'accrochage de l'extrémité libre, que dans la tenue de l'extrémité supérieure avec le capot. Une forme spécifique de béquille, notamment coudée, peut entraîner une extériorisation de cette béquille lors d'une fermeture exagérée du capot.

En outre, l'accrochage de la béquille au capot doit prendre en compte des contraintes différentes, à savoir le support du capot pour éviter qu'il redescende sur le bloc avant trop rapidement, et le maintien du capot en cas de coup de vent par exemple, pour éviter qu'il ne parte dans le pare brise.

Un des objectifs de l'invention est de proposer une béquille de capot apte à encaisser ces différents types d'efforts subis par le capot.

En outre, en réponse à des objectifs que l'on retrouve invariablement chez les différents constructeurs automobiles, la présente invention se veut également peu coûteuse et peu encombrante.

Pour répondre à ces objectifs, l'invention propose un dispositif de retenue de capot formé d'une béquille dont la première extrémité porte des premiers moyens d'articulation, et dont l'extrémité libre porte un moyen d'accrochage du capot, les premiers moyens d'articulation étant formés d'une agrafe, montée sur la première extrémité du dispositif de retenue.

Selon l'invention, l'agrafe est apte à coopérer avec un pontet solidaire de la caisse et qui présente un trou en boutonnière, dans lequel un trou cylindrique est muni de deux orifices débouchant disposés symétriquement sur le pourtour de ce trou cylindrique. Toujours selon l'invention, l'agrafe comporte au moins un élément cylindrique disposé autour de l'extrémité de la béquille, deux pattes renforcées venues de matière avec cet élément cylindrique étant disposées symétriquement sur le pourtour de cet élément cylindrique de sorte que les pattes renforcées de l'agrafe sont aptes à venir se positionner du côté du pontet opposé à la béquille. Et enfin, les orifices débouchant et les pattes renforcées présentent des formes et des dimensions complémentaires, de sorte que les pattes renforcées peuvent être emmanchées dans les orifices débouchant lorsque l'élément cylindrique coopère avec le trou cylindrique.

Selon différentes caractéristiques de la présente invention :
- les orifices débouchant peuvent être disposés sur le pontet solidaire de la caisse du véhicule, selon un axe formant un angle déterminé par rapport à l'horizontal ;
- la béquille peut former un angle avec la verticale lorsque le capot est en appui contre la béquille, les pattes renforcées étant dans cette position sensiblement perpendiculaire aux orifices débouchant.

D'autres caractéristiques et avantages de l'invention apparaîtront à la lecture de la description détaillée qui suit pour la compréhension de laquelle on se reportera aux dessins annexés dans lesquels :

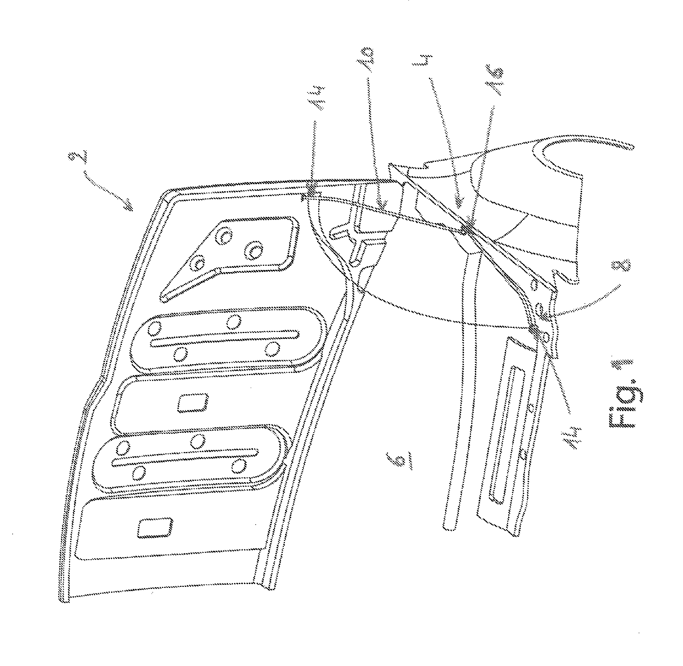

- la figure 1 est une représentation schématique d'un véhicule muni d'un dispositif de retenue de capot selon l'invention ;

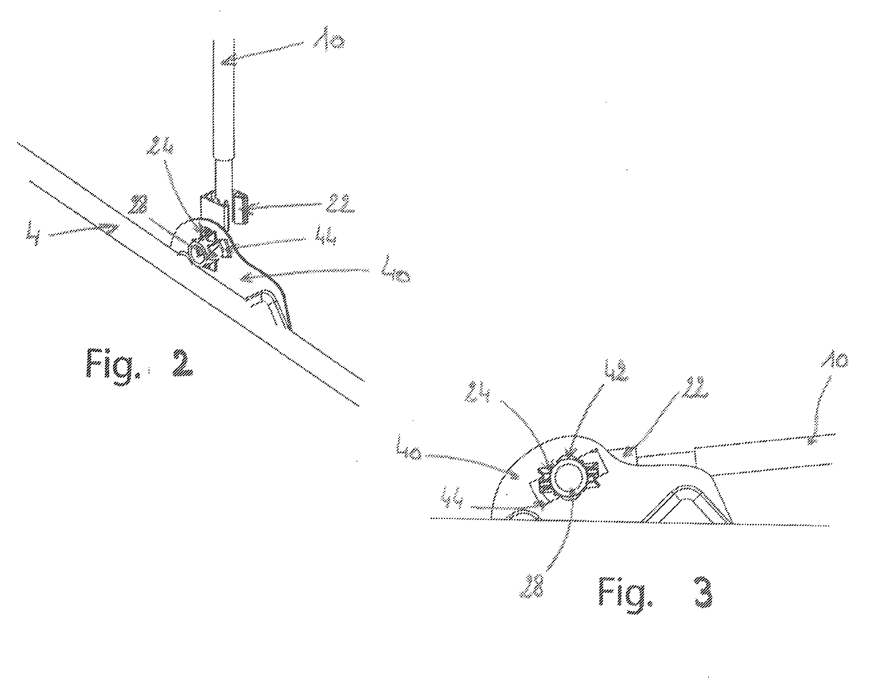

- la figure 2 est une représentation schématique des premiers moyens d'articulation du dispositif sur caisse, et du pontet associé, dans une position relevée du dispositif de retenue ;
- la figure 3 est une représentation équivalente à la figure 2, dans une position abaissée du dispositif de retenue ;
- les figures 4 à 7 sont des représentations de l'agrafe formant les premiers moyens d'articulation selon l'invention.

Tel que représenté, un capot 2 de véhicule est articulé sur la caisse 4 d'un véhicule de sorte que ce capot 2 est apte à passer d'une position fermée recouvrant le bloc avant 6 du véhicule à une position ouverte dans laquelle un accès est laissé au bloc avant 6.

Un dispositif de retenue de capot est monté articulé sur la caisse 4, de sorte que d'une part, son extrémité libre 14 est apte à coopérer avec le capot 2 lorsque ce capot 2 est en position ouverte, et que d'autre part ce dispositif de retenue peut être disposé sensiblement horizontalement le long de la caisse 4 lorsque le capot 2 est en position fermée.

Le dispositif de retenue, appelé communément, et par la suite de la description, la béquille 10 de capot, présente la forme d'un fil dont une première extrémité 16 porte des premiers moyens d'articulation 18 sur la caisse, et dont l'extrémité libre 14 porte un moyen d'accrochage apte à coopérer avec le capot 2.

Tel que représenté à titre d'exemple, le fil 12 formant la partie centrale de la béquille 10 peut présenter un coude incurvé, de sorte que la béquille 10, en position sensiblement horizontale, peut reposer sur le côté de la caisse 4 du véhicule et accompagner les courbes de ce côté de caisse, l'extrémité libre 14 de la béquille 10 pouvant être orientée vers l'intérieur du véhicule pour reposer sur la face avant technique 8.

L'articulation de la béquille 10 sur caisse se fait par l'intermédiaire de premiers moyens d'articulation 18 disposés à la première extrémité 16 de la béquille 10, aptes à coopérer avec un pontet 40 solidaire de la caisse 4. Afin d'éviter que l'extériorisation de la béquille 10 entraîne un déclipsage des premiers moyens d'articulation 18 sur le pontet 40, les premiers moyens d'articulation 18 selon l'invention sont formés par une agrafe 20 sur laquelle sont disposées deux pattes renforcées 24.

L'agrafe 20 est formée d'une base 22 sensiblement en forme de U qui vient se cliper sur le fil formant la béquille 10, et d'une première partie intermédiaire 26 qui prolonge perpendiculairement cette base 22. Cette première partie intermédiaire 26 est munie en son centre d'un orifice apte à laisser le passage au fil 12 formant la béquille 10, et est prolongée par un élément cylindrique 28 creux à l'opposé de la base 22, l'orifice de l'élément cylindrique 28 étant dans la continuité de l'orifice de la première partie intermédiaire 26. Les deux pattes renforcées 24 sont venues de matière avec le pourtour de l'élément cylindrique 28.

Une telle agrafe 20 est chaussée sur la première extrémité 16 de la béquille 10, qui présente la forme d'une patte à angle droit. La première extrémité 16 est insérée dans l'orifice de l'élément cylindrique 28, et le fil 12 formant la béquille 10 est clipé dans la base 22 de l'agrafe 20.

Un pontet 40 est solidarisé à la caisse. Ce pontet 40 présente sur une face sensiblement verticale un trou en forme en boutonnière, avec un trou cylindrique 42 et deux orifices débouchant 44 sur ce trou. L'agrafe 20 coopère avec ce pontet 40 de sorte que la base 22 de l'agrafe 20 est positionnée d'un coté de la face verticale du pontet 40, et les deux pattes renforcées 24 sont disposées de l'autre côté de cette face. Les orifices débouchant 44 et les pattes renforcées 24 de l'agrafe 20 présentent des formes complémentaires, et des dimensions déterminées de sorte qu'au montage, les pattes renforcées 24 doivent être forcées pour traverser la face verticale du pontet 40, et qu'à l'usage, la béquille 10 et l'agrafe 20 associé puisse tourner sans que les pattes ne sortent par les orifices débouchant 44. En outre, l'épaisseur des pattes renforcées 24 est déterminée pour résister à l'arrachement lorsque des efforts sont subis par la béquille 10.

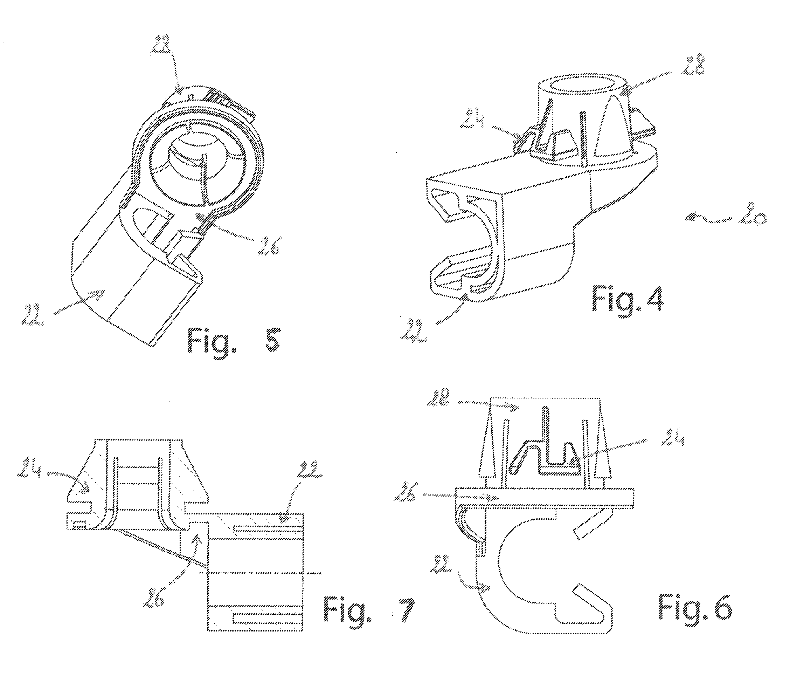

Avantageusement, tel que représenté à la figure 4 et 5, les deux trous débouchant 44 sont disposés symétriquement de part et d'autre du trou cylindrique 42, et les pattes renforcées 24 doivent alors être disposées symétriquement également. Ces trous débouchant 44 sont orientés avec un angle déterminé α par rapport à l'horizontale. Cette orientation est ici choisie par le fait que la béquille 10 présente un angle déterminé par rapport à la verticale lorsque cette béquille 10 supporte le capot ouvert. Il est en effet avantageux qu'en position de support capot, les pattes renforcées 24 de l'agrafe 20 montée sur la béquille 10 soient sensiblement perpendiculaires aux trous débouchant 44, afin d'être en contact avec un maximum de tôle. Plus la tôle du pontet 40 est prise en sandwich par l'agrafe 20 et les pattes renforcées 24, meilleure est la tenue à la traction de l'agrafe 20.

L'extrémité libre 14 de la béquille 10 présente un moyen d'accrochage surmoulé sur le fil d'acier de la béquille 10 de capot, ce moyen d'accrochage 30 étant apte à coopérer avec le capot 2.

La béquille 10 est rendue solidaire du capot par la coopération du moyen d'accrochage avec un moyen de réception réalisé sur la doublure de capot. Ce moyen de réception consiste selon l'invention en un simple orifice réalisé dans la doublure, de forme correspondante à la forme principale de la patte d'accrochage 34.

## Revendications

1. Dispositif de retenue de capot (10) d'un véhicule automobile, formé d'une béquille dont la première extrémité (16) porte des premiers moyens d'articulation (18), et dont l'extrémité libre (14) porte un moyen d'accrochage (30) du capot (2), les premiers moyens d'articulation (18) étant formés d'une agrafe (20), montée sur la première extrémité (16) du dispositif de retenue (10), **caractérisé en ce que** l'agrafe (20) est apte à coopérer avec un pontet (40) solidaire de la caisse et qui présente un trou en boutonnière, dans lequel un trou cylindrique (42) est muni de deux orifices débouchant (44) disposés symétriquement sur le pourtour de ce trou cylindrique (42), l'agrafe (20) comportant en outre au moins un élément cylindrique (28) , deux pattes renforcées (24) venues de matière avec cet élément cylindrique (28) étant disposées symétriquement sur le pourtour de cet élément cylindrique (28) de sorte que les pattes renforcées (24) de l'agrafe (20) sont aptes à venir se positionner du côté du pontet (40) opposé à la béquille, et les orifices débouchant (44) et les pattes renforcées (24) présentant des formes et des dimensions complémentaires, de sorte que les pattes renforcées (24) peuvent être emmanchées dans les orifices débouchant (44) lorsque l'élément cylindrique (28) coopère avec le trou cylindrique (42).

2. Dispositif de retenue selon la revendication 1, **caractérisé en ce que** les orifices débouchant (44) sont disposés sur le pontet (40) solidaire de la caisse du véhicule, selon un axe formant un angle déterminé (α) par rapport à l'horizontal.

3. Dispositif de retenue selon la revendication 2, **caractérisé en ce que** la béquille forme un angle avec la verticale lorsque le capot (2) est en appui contre la béquille, les pattes renforcées (24) étant dans cette position sensiblement perpendiculaire aux orifices débouchant (44).

## Claims

1. Device for retaining a bonnet (10) of a motor vehicle, formed by a stay of which the first end (16) supports first articulation means (18), and of which the free end (14) supports a coupling means (30) for coupling the bonnet (2), the first articulation means (18) being formed from a clip (20), mounted on the first end (16) of the retaining device (10), **characterized in that** the clip (20) is capable of interacting with a connecting strap (40) secured to the body shell and having a buttonhole in which a cylindrical hole (42) is furnished with two open-ended orifices (44) placed symmetrically on the periphery of this cylindrical hole (42), the clip (20) also comprising at least one cylindrical element (28), two reinforced lugs (24) made of the same material and in one piece with this cylindrical element (28) being placed symmetrically on the periphery of this cylindrical element (28) so that the reinforced lugs (24) of the clip (20) are capable of being positioned on the side of the connecting strap (40) opposite to the stay, and the open-ended orifices (44) and the reinforced lugs (24) having complementary shapes and dimensions, so that the reinforced lugs (24) can be fitted into the open-ended orifices (44) when the cylindrical element (28) interacts with the cylindrical hole (42).

2. Retaining device according to Claim 1, **characterized in that** the open-ended orifices (44) are placed on the connecting strap (40) secured to the bodywork of the vehicle, along an axis forming an angle (α) determined relative to the horizontal.

3. Retaining device according to Claim 2, **characterized in that** the stay forms an angle with the vertical when the bonnet (2) is resting against the stay, the reinforced lugs (24) being in this position substantially perpendicular to the open-ended orifices (44).

## Patentansprüche

1. Vorrichtung zum Halten der Haube (10) eines Kraftfahrzeugs, die von einer Stützvorrichtung gebildet wird, deren erstes Ende (16) erste Gelenkeinrichtungen (18) trägt und deren freies Ende (14) eine Einhakeinrichtung (30) der Haube (2) trägt, wobei die ersten Gelenkeinrichtungen (18) von einer Klammer (20) gebildet werden, die auf das erste Ende (16) der Haltevorrichtung (10) montiert ist, **dadurch gekennzeichnet, dass** die Klammer (20) mit einem Bügel (40) zusammenwirken kann, der fest mit der Karosserie verbunden ist und ein Langloch aufweist, bei dem ein zylindrisches Loch (42) mit zwei Durchgangsöffnungen (44) versehen ist, die symmetrisch auf dem Umfang dieses zylindrischen Lochs (42) angeordnet sind, wobei die Klammer (20) außerdem mindestens ein zylindrisches Element (28) enthält, wobei zwei verstärkte Laschen (24), die aus einem Stück mit diesem zylindrischen Element (28) bestehen, symmetrisch auf dem Umfang dieses zylindrischen Elements (28) angeordnet sind, so dass die verstärkten Laschen (24) der Klammer (20) sich auf der Seite des Bügels (40) entgegengesetzt zur Stützvorrichtung positionieren können, und die Durchgangsöffnungen (44) und die verstärkten Laschen (24) komplementäre Formen und Abmessungen aufweisen, so dass die verstärkten Laschen (24) in die Durchgangsöffnungen (44) eingeschoben werden können, wenn das zylindrische Element (28) mit dem zylindrischen Loch (42) zusammenwirkt.

2. Haltevorrichtung nach Anspruch 1, **dadurch gekennzeichnet, dass** die Durchgangsöffnungen (44) auf dem fest mit der Karosserie des Fahrzeugs verbundenen Bügel (40) gemäß einer Achse angeordnet sind, die einen bestimmten Winkel (α) bezüglich der Waagrechten bildet.

3. Haltevorrichtung nach Anspruch 2, **dadurch gekennzeichnet, dass** die Stützvorrichtung einen Winkel mit der Senkrechten bildet, wenn die Haube (2) gegen die Stützvorrichtung in Auflage ist, wobei die verstärkten Laschen (24) in dieser Stellung im Wesentlichen lotrecht zu den Durchgangsöffnungen (44) sind.
